# EUROPEAN PATENT APPLICATION

(11) **EP 3 674 488 A1**
(43) Date of publication of application: **01.07.2020**
(21) Application number: 18875024.4
(22) Date of filing: 19.10.2018
(51) Int. Cl.: E02F 9/26, H04N 7/18

(54) **DETECTION DEVICE AND CONSTRUCTION MACHINE**

(30) Priority: 10.11.2017 JP 2017217341
(71) Applicant: Kobelco Construction Machinery Co., Ltd., Hiroshima-shi, Hiroshima 731-5161 (JP)
(72) Inventor: KINOSHITA, Akira, Hiroshima-shi Hiroshima 731-5161 (JP); YOSHIHARA, Hideki, Hiroshima-shi Hiroshima 731-5161 (JP)
(74) Representative: TBK
(86) International application number: PCT/JP2018/038919
(87) International publication number: WO 2019/093097

(57) **Abstract**

A detection apparatus comprises a detection unit 40 including: a sensor 41 for detecting at least a shape; a storage section 44 for storing shape information of a counterweight 34, which is a portion of a construction machine, detected by the sensor 41 as mark shape information; a determination section 45 for determining whether the mark shape information matches detected shape information that is shape information of the counterweight 34 newly detected by the sensor 41; and a processing section 52 for, when the determination section 45 has determined that the mark shape information and the detected shape information do not match, determining whether the detected shape information satisfies a predetermined update condition and, when having determined that the update condition is satisfied, updating the mark shape information stored in the storage section 44with the detected shape information as new mark shape information.

## Description

### Technical Field

The present invention relates to a detection apparatus provided in a construction machine and the construction machine.

### Background Art

In recent years, driving assistance systems for vehicles with on-board cameras have been developed. For example, Patent Literature 1 discloses a technique of operating a driving assistance system that, when the photographing optical axis of an on-board camera is deviated, estimates the amount of deviation using a portion of the vehicle (such as a mark on the windshield, or a mascot on the trunk or the hood) as a mark and corrects the deviation.

The above-mentioned technique disclosed in Patent Literature 1 makes it possible, when the photographing optical axis of the on-board camera is deviated due to, for example, vibration during the vehicle's running or a change in the ambient temperature, to automatically detect the amount of deviation and operates the driving assistance system based on the detection.

In addition, according to the above-mentioned technique disclosed in Patent Literature 1, a frame memory is updated to have new image position information if the amount of deviation of the photographing optical axis is within a predetermined range, but an alarm buzzer is activated to issue an alarm if the amount of deviation is great, exceeding the predetermined range.

However, although the above-mentioned driving assistance system for a vehicle with an on-board camera disclosed in Patent Literature 1 considers a positional deviation due to aging of the on-board camera, there is no statement about a change in the mark of the vehicle itself serving as a reference for detecting a deviation.

Nevertheless, in an outdoor environment where a construction machine is used, for example, a portion of the construction machine serving as the mark may be deformed by an external force due to, for example, contact or interference. For example, a counterweight mounted on a rear portion of an upper slewing body can be used as the mark, but it is highly likely to be deformed by contact or interference with a neighboring object. Thus, if the above-mentioned technique disclosed in Patent Literature 1 is applied to a construction machine, an alarm buzzer will be issued each time the amount of deviation is determined to exceed a predetermined range due a deformation of the mark, which is a problem. In addition, if the deformation of the mark is excessive, the construction machine will lose sight of the mark itself and stop functioning. This is also a problem. Anyway, Patent Literature 1 has a problem of reducing the working efficiency of a construction machine.

### Citation List

### Patent Literature

Patent Literature 1: Japanese Unexamined Patent Publication No. 2004-173037

### Summary of Invention

It is an object of the present invention to provide a detection apparatus capable of preventing a reduction in the working efficiency of a construction machine even when a portion of the working machine serving as a mark is slightly deformed by an external force due to, for example, contact or interference in an outdoor usage environment.

A detection apparatus according to an aspect of the present invention is a detection apparatus provided in a construction machine, comprising: a sensor for detecting shape information of a portion of the construction machine; a storage section for storing the shape information detected by the sensor as mark shape information; a determination section for determining whether the mark shape information matches detected shape information, which is shape information of the portion of the construction machine newly detected by the sensor; and a processing section for, when the determination section has determined that the mark shape information and the detected shape information do not match, determining whether the detected shape information satisfies a predetermined update condition and, when having determined that the update condition is satisfied, updating the mark shape information stored in the storage section with the detected shape information as new mark shape information.

The above-described configuration makes it possible to prevent a reduction in the working efficiency of a construction machine even when a portion of the working machine serving as a mark is slightly deformed by an external force due to, for example, contact or interference in an outdoor usage environment.

### Brief Description of Drawings

FIG. 1 includes schematic explanatory diagrams for explaining a construction machine according to the present invention, the upper diagram showing a plan view and the lower diagram showing a side view.
FIG. 2 is a block diagram for explaining a configuration of a detection apparatus for use in the construction machine according to the present invention.
FIG 3 is a diagram showing an example of shape information of a portion of the construction machine detected by a sensor shown in FIG. 2, which is shape information of the portion at the time of shipping from the factory.
FIG. 4 is a diagram showing an example of the shape information of the portion of the construction machine detected by the sensor shown in FIG. 2, which is shape information of a counterweight having deformed.
FIG. 5 is a flowchart for explaining operations of the detection apparatus according to the present invention.

### Description of Embodiments

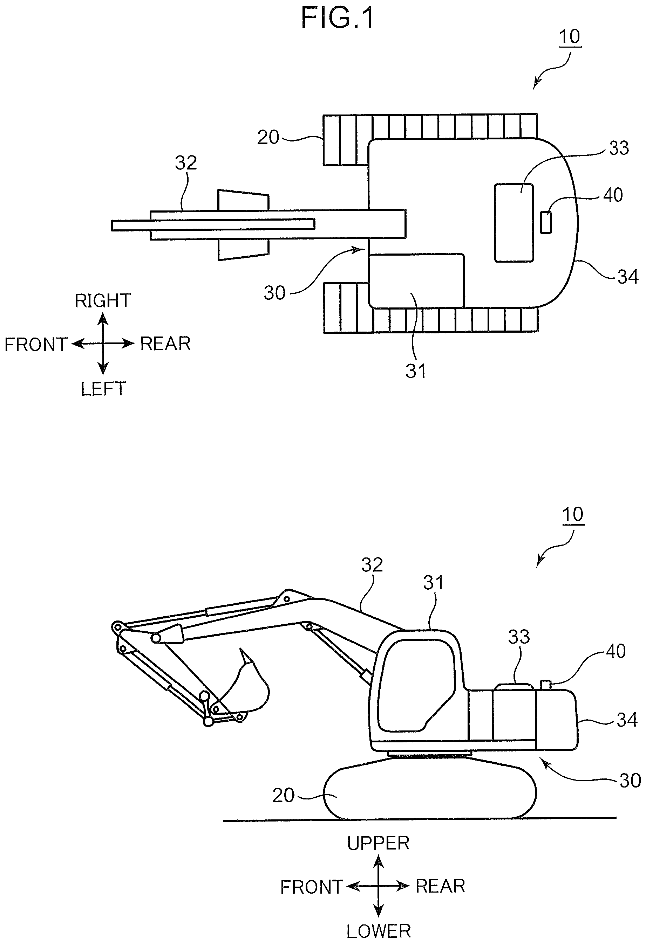

Hereinafter, a detection apparatus according to an embodiment of the present invention will be described with reference to FIGS. 1 to 5.

FIG. 1 includes schematic explanatory diagrams for explaining a construction machine 10 according to the embodiment of the present invention, the upper diagram showing a plan view and the lower diagram showing a side view. In FIG. 1, the construction machine 10 is in the form of a hydraulic excavator, for example. However, this is merely illustrative. The construction machine 10 may be of a type other than a hydraulic excavator, such as a crane or a hybrid excavator. It should be noted that in FIG. 1, a longitudinal direction of a lower travelling body 20 is referred to as a "front-rear direction", a direction parallel to the ground and perpendicularly intersecting the front-rear direction is referred to as a "left-right direction", and a direction perpendicularly intersecting both the front-rear direction and the left-right direction is referred to as an "upper-lower direction".

In addition, a direction in which the lower travelling body 20 advances is referred to as "front", and a direction in which the lower travelling body 20 retreats is referred to as "rear". Further, a left hand direction as viewed from behind is referred to as "left", and a right hand direction as viewed from behind is referred to as "right". Further, an upper side in the upper-lower direction is referred to as "upper" and a lower side in the upper-lower direction is referred to as "lower".

The construction machine 10 includes the lower travelling body 20, an upper slewing body 30 slewably mounted on an upper surface of the lower travelling body 20, an operator's cab 31 mounted on the upper slewing body 30, a working attachment 32 supported on the upper slewing body 30, an engine room 33 mounted on the upper slewing body 30, a counterweight 34 forming a rear portion of the upper slewing body 30, and a detection unit 40 disposed on the counterweight 34.

The lower travelling body 20 includes crawlers, and is driven by a hydraulic motor to advance and retreat the construction machine 10. The upper slewing body 30 is slewed with respect to the lower travelling body 20 by a driving force of the hydraulic motor, for example. The working attachment 32 includes a boom pivotally attached to a front surface of the upper slewing body 30, an arm pivotally attached to the boom, and a head attachment pivotally attached to the arm. Each of the boom, the arm, and the head attachment is pivoted by power received from a respective hydraulic cylinder. Here, the head attachment is in the form of a bucket, but this is merely illustrative. The head attachment may alternatively be in the form of a breaker or a nibbler.

The counterweight 34 has a substantially rectangular parallelepiped shape having a slightly longer dimension in the upper-lower direction than the front-rear direction as viewed from the left, and has a rear end curving outward and symmetrical about the front-rear direction as viewed from above. With reference to the lower diagram of FIG. 1, the detection unit 40 is disposed at the center of an upper surface of the counterweight 34 in the left-right direction.

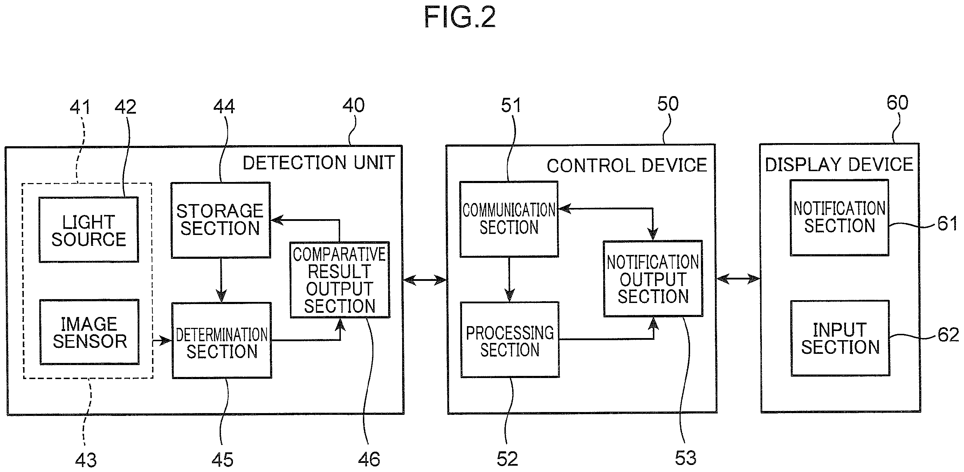

The detection unit 40 includes a sensor 41 (see FIG. 2) having an optical axis set such that part of the counterweight 34 falls within the field of view of the sensor 41. Here, the optical axis of the sensor 41 is set to be parallel to the front-rear direction, for example. This allows the sensor 41 to include the contour of the rear end of the counterweight 34 within its field of view. The contour of the rear end of the counterweight 34 is liable to deform due to contact or interference. Therefore, including the shape of the rear end within the field of view of the sensor 41 helps to detect a deformation of the counterweight 34. However, this is merely illustrative. The optical axis of the sensor 41 may be inclined slightly downward in a pitch direction at about 10 degrees or less, for example. This would allow the sensor 41 to more reliably include the shape of the rear end of the counterweight 34 within its field of view.

FIG. 2 is a block diagram for explaining a configuration of the detection apparatus provided in the construction machine 10 shown in FIG. 1. In FIG. 2, the detection apparatus includes the detection unit 40, a control device 50, and a display device 60. The detection unit 40 and the control device 50 are connected in a mutually communicable manner via an on-board network. In addition, the control device 50 and the display device 60 are connected in a mutually communicable manner via the on-board network.

The detection unit 40 includes the sensor 41, a storage section 44, a determination section 45, and a comparative result output section 46. The sensor 41 is in the form of a three-dimensional range image sensor manufactured by OPTEX CO., LTD, for example, and detects the shape of an object. The sensor 41 includes a light source 42 and an image sensor 43.

The light source 42 comprises a light emitting diode for emitting near infrared rays, for example. The image sensor 43 is in the form of a CMOS image sensor, for example. The image sensor 43 measures in real time the time it takes for near infrared rays emitted by the light source 42 to be reflected by a target object and return thereto for each region of pixels. This allows the image sensor 43 to acquire three-dimensional range images at a predetermined frame rate.

The storage section 44 comprises a nonvolatile memory, for example, and stores in advance shape information of the counterweight 34 within the field of view of the sensor 41 as mark shape information. In the present embodiment, the storage section 44 stores in advance shape information of the counterweight 34 just shipped from the factory with no deformation as the mark shape information, for example.

The determination section 45 comprises a processor such as a CPU, for example, and determines by comparison whether the mark shape information stored in the storage section 44 matches detected shape information that is shape information of the counterweight 34 detected by the sensor 41. Here, the determination section 45 calculates the degree of similarity between the feature quantity of the detected shape information and the feature quantity of the mark shape information. If the degree of similarity is less than or equal to a threshold value, the determination section 45 determines that the detected shape information matches the mark shape information. On the other hand, if the degree of similarity between the feature quantity of the detected shape information and the feature quantity of the mark shape information is greater than the threshold value, the determination section 45 determines that the detected shape information does not match with the mark shape information.

As the feature quantity, HONV (Histogram of Oriented Normal Vectors) feature can be used, for example. The HONV feature represents three-dimensional characteristics of an object using a histogram illustrating the relationship between the normal vector of each of pixels representing an object surface and the frequency.

In this case, the determination section 45 detects, from the detected shape information, a set of clusters representing a continuous distance to thereby extract the counterweight 34, and calculates the HONV feature using data of each of the pixels representing the counterweight 34. The determination section 45 similarly calculates the HONV feature of the mark shape information. As the degree of similarity, the inverse of the cosine distance between vectors can be used, for example.

The comparative result output section 46 is constituted by a communication interface and a processor, for example, and transmits to the control device 50 a determination result provided by the determination section 45 together with the detected shape information.

The control device 50 is in the form of an electric circuit formed in the upper slewing body 30, for example. The control device 50 includes a communication section 51, a processing section 52, and a notification output section 53.

The communication section 51 comprises a communication interface, for example, and receives the determination result transmitted by the comparative result output section 46.

The processing section 52 is in the form of a processor such as a CPU, for example, and determines, when the communication section 51 has received a determination result provided by the determination section 45 indicating that the mark shape information and the detected shape information do not match, whether the detected shape information satisfies a predetermined update condition. Here, the update condition is a condition for updating the mark shape information stored in the storage section 44 with the detected shape information as new mark shape information. The update information will be described in detail later.

The processing section 52, in the case of having determined that the detected shape information satisfies the update condition, transmits to the detection unit 40 via the communication section 51 an update command for updating the mark shape information stored in the storage section 44 with the detected shape information as new mark shape information. Upon receiving the update command, the comparative output section 46 updates the mark shape information stored in the storage section 44 with the detected shape information as new mark shape information. Consequently, the storage section 44 stores the mark shape information reflecting the shape of the deformed counterweight 34. This prevents frequent activation of an alarm buzzer, for example, thereby preventing a reduction in the working efficiency of the construction machine 10.

In addition, when the communication section 51 has received the determination result provided by the determination section 45 indicating that the mark shape information and the detected shape information do not match, the processing section 52 may transmit to the display device 60 via the alarm output section 53 an alarm command for causing a notification section 61 to issue an alarm.

Further, the processing section 52, in the case of having determined that the detected shape information satisfies the update condition, may transmit to the display device 60 via the alarm output section 53 an inquiry command for asking the operator whether to perform the update with the detected shape information. In this case, if an input section 62 accepts an operation to select permission for the update by the operator, the processing section 52 transmits to the detection unit 40 via the communication section 51 the update command for updating the mark shape information stored in the storage section 44 with the detected shape information as new mark shape information.

The notification output section 53 is in the form of a communication interface, for example, and, in the case of having received the alarm command outputted by the processing section 52, transmits the received alarm command to the display device 60. Further, the alarm output section 53, in the case of having received the inquiry command from the processing section 52, transmits the received inquiry command to the display device 60.

The display device 60 is disposed in the operator's cab 31, and includes the notification section 61 and the input section 62. The notification section 61comprises a speaker for emitting a buzzing sound, for example. Upon receiving the alarm command transmitted by the alarm output section 53, the notification section 61 emits a buzzing sound, thereby issuing an alarm.

The input section 62 is constituted by selection buttons, a touch panel, and a display device, for example, and, in the case of having received the inquiry command transmitted by the notification output section 53, displays on the display device an inquiry image asking the operator whether to update the mark detection information stored in the storage section 44 with the detected shape information. Further, the input section 62, in the case of having received the alarm command transmitted by the alarm output section 53, may display on the display device an image notifying the operator that the shape of the counterweight 34 differs from the shape represented by the mark shape information, and thereby issue an alarm.

Further, the input section 62, having been manipulated by the operator for selection as to whether to update the mark detection information with the detected shape information, transmits the selection result to the control device 50. Here, in the case of having accepted an operation to select permission for the update, the input section 62 transmits to the control device 50 the update command for updating the mark shape information stored in the storage section 44 with the detected shape information as new mark shape information. This update command is transmitted to the detection unit 40 via the control device 50. Upon receiving the update command, the comparative result output section 46 updates the mark shape information stored in the storage section 44 with the detected shape information as new mark shape information.

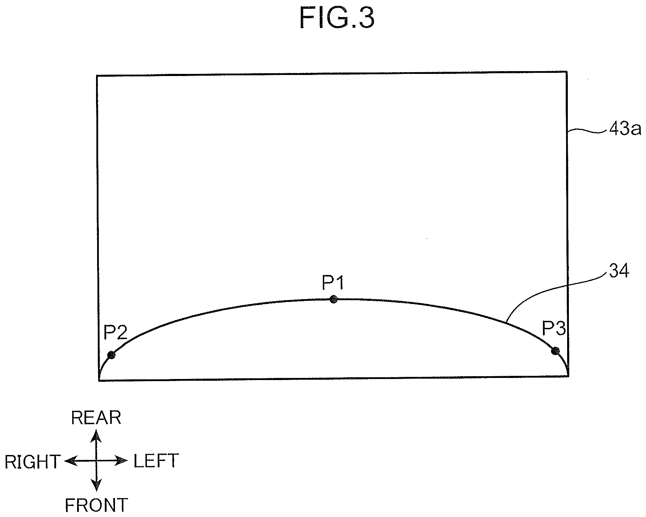

FIG. 3 is a diagram showing an example of default mark shape information. Here, the default mark shape information represents the shape of a portion of the counterweight 34 at the time of shipping from the factory, for example. As shown in FIG. 3, the mark shape information is comprises a range image including the portion of the counterweight 34 detected within the field of view 43a of the image sensor 34. It should be noted that in the field of view 43a, the vertical direction corresponds to the front-rear direction and the horizontal direction corresponds to the left-right direction.

The default mark shape information is generated by the sensor 41 measuring the portion of the counterweight 34 before shipping from the factory. As shown in the upper diagram of FIG. 1, the detection unit 40 including the sensor 41 is disposed such that its optical axis extends in the front-rear direction as viewed from above. The counterweight 34 has a shape axially symmetrical about the front-rear direction. Thus, in the example shown in FIG. 3, the rear end of the counterweight 34 within the field of view 43a curves outward and symmetrical about the front-rear direction.

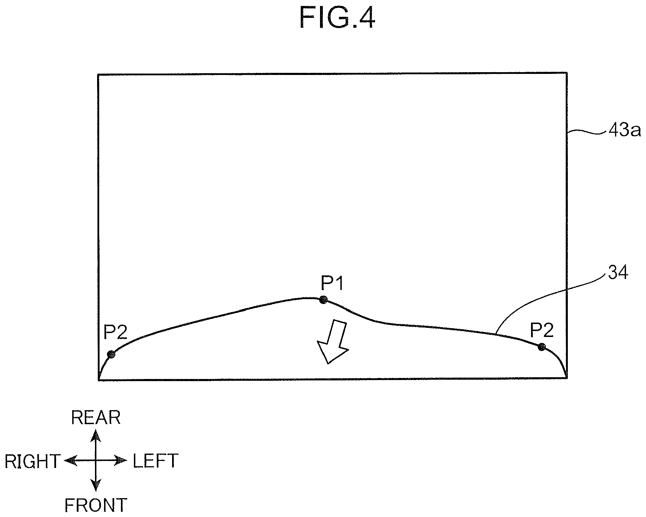

FIG. 4 is a diagram showing an example of the detected shape information detected by the sensor 41 shown in FIG. 2. The detected information shown in FIG. 4 includes within the field of view 43a the portion of the counterweight 34 deformed by an external force. Specifically, the portion of the counterweight 34 has been subjected to an external force applied thereto diagonally forward right as indicated by the arrow at its approximate center in the left-right direction, and is thus dented in the diagonally forward right direction. Therefore, it is possible for the determination section 45 to compare the feature quantity of the mark shape information shown in FIG. 3 and the feature quantity of the detected shape information shown in FIG. 4 to thereby determine whether the mark shape information and the detected information match.

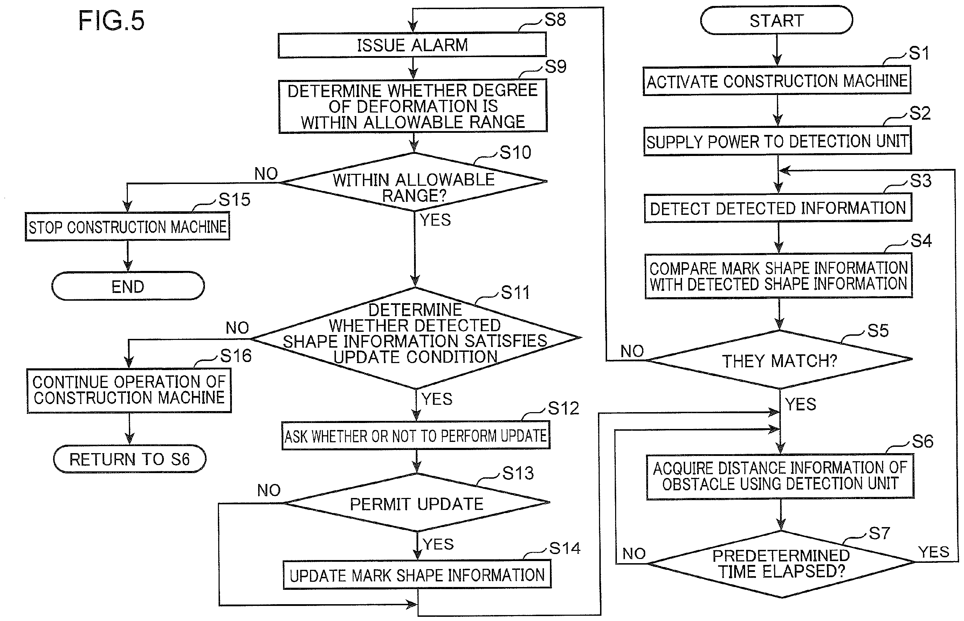

FIG. 5 is a flowchart for explaining operating principles of the detection apparatus shown in FIG. 1.

Hereinafter, operations of the detection apparatus according to the present embodiment will be described with reference to the flowchart shown in FIG. 5.

The control device 50 causes the construction machine 10 to start operating (step S1). Here, the control device 50 is triggered to cause the construction machine 10 to start operating when the input section 62 accepts an operation to turn on an ignition key by the operator.

Next, the control device 50 transmits a power supply command via the communication section 51 to power the detection unit 40 (step S2). At the time of step S2, the storage section 44 stores the shape information of the counterweight 34 at the time of shipping from the factory (see FIG. 3) as the mark shape information.

Next, the sensor 41 detects detected shape information representing the current shape of the counterweight 34 (step S3). Here, the sensor 41 measures the detected shape information of the counterweight 34 deformed by an external force as shown in FIG. 4, for example.

Next, the determination section 45 compares the mark shape information stored in advance in the storage section 44 with the detected shape information detected by the sensor 41 (step S4). Here, the determination section 45 calculates the degree of similarity between the respective feature quantities of the counterweight 34 represented by the mark shape information and the detected shape information as described above, thereby comparing the mark shape information and the detected shape information.

Next, the determination section 45 determines, based on the comparison result obtained at the above-described step S4, whether the shape of the counterweight 34 represented by the mark shape information and the shape of the counterweight 34 represented by the detected shape information match (step S5). Here, the determination section 45 determines whether they match or not by determining whether the degree of similarity is greater than the threshold value, as described above.

Next, the determination section 45, in the case of having determined that the two pieces of information agree at the above-described step S5 (YES at step S5), acquires distance information of an obstacle from the detected shape information detected by the sensor 41 (step S6). Here, the acquired distance information will be used for an interference prevention control of preventing the obstacle from interfering with the operation of the construction machine 10, for example.

Next, the determination section 45 determines whether the operation at step S6 has been performed until a predetermined time has elapsed (step S7). If it is determined that the predetermined time has elapsed since the start of the operation at step S6 (YES at step S7), the process returns to the above-describcd step S3 to perform again the determination as to whether the counterweight 34 represented by the mark shape information and the counterweight 34 represented by the detected shape information match. On the other hand, if it is determined that the predetermined time has not elapsed since the start of the operation at step S6 (NO at step S7), the process returns to step S6. In other words, the operation of acquiring the distance information of the obstacle is repeated until the predetermined time has elapsed, during which the control device 50 performs the interference prevention control.

On the other hand, the processing section 52, in the case of having determined that the two pieces of information do not agree at the above-described step S5 (NO at step S5), transmits to the display device 60 via the notification output section 53 the alarm command for issuing an alarm indicating that the counterweight 34 has been deformed from its shape at the time of shipping from the factory (step S8). The operation at step S8 makes it possible to notify the operator that the counterweight 34 has been deformed from its shape at the time of shipping from the factory.

Next, the processing section 52 determines whether the difference between the mark shape information and the detected shape information (i.e. the degree of deformation) is within an allowable range (step S9). Here, whether the degree of deformation is within the allowable range or not is determined according to the following two determination criteria, for example.
(1) The first determination criterion is as follows: When the difference between the proportion of the area of the counterweight 34 within the field of view 43a in the detected shape information and the proportion of the area of the counterweight 34 within the field of view 43a in the mark shape information is less than or equal to a predetermined first threshold value, it is determined that the degree of deformation is within the allowable range, and when the difference exceeds the predetermined first threshold value, it is determined that the degree of deformation is out of the allowable range.
(2) The second determination criterion is as follows: A reference point is set in the counterweight 34, and when the degree of change of the reference point in the detected shape information from the reference point in the mark shape information is less than or equal to a predetermined second threshold value, it is determined that the degree of deformation is within the allowable range, and when the degree of change exceeds the predetermined second threshold value, it is determined that the degree of deformation is out of the allowable range.

Here, the reference point refers to a point representing a shape feature of the counterweight 34. For example, with reference to FIG. 3, the point denoted by P1 at the rearmost end of the counterweight 34 can be used as the reference point. Alternatively, as denoted by P2 and P3 in FIG. 3, the points on a curve representing the contour of the counterweight 34 where the curvature is maximum can be used as the reference point.

For example, the processing section 52 extracts the reference point P1 from the mark shape information and extracts the reference point P1 from the detected shape information, and calculates the Euclidean distance between these reference points P1 as the degree of deformation. This also applies to the case of using the reference points P2 and P3. Here, the processing section 52 may calculate the degree of deformation using one of the reference points P1, P2, and P3, or may calculate the degree of deformation using two or more of the reference points P1, P2, and P3. In the case of using two or more of the reference points P1, P2, and P3, the processing section 52 calculates the sum of the Euclidean distances between the corresponding reference points as the degree of deformation, for example. Alternatively, the processing section 52 may calculate the difference, instead of the Euclidean distance, between the corresponding reference points.

The processing section 52 may determine whether the degree of deformation is within the allowable range using either one or both of the first and second determination criteria. In the case of using both determination criteria, the processing section 52 may make a final determination that the degree of deformation is within the allowable range when having determined that the degree of deformation is within the allowable range according to each of the first and second determination criteria. Alternatively, the processing section 52 may make a final determination that the degree of deformation is within the allowable range when having determined that the degree of deformation is within the allowable range according to either of the two determination criteria.

If the degree of deformation is determined to be within the allowable range at step S9, the determination at step S10 is YES, and the process proceeds to step S11. If the degree of deformation is determined to be out of the allowable range at step S9, the determination at step S10 is NO, and the process proceeds to step S15.

At step S11, the processing section 52 determines whether the detected shape information satisfies the update condition. If the detected shape information satisfies the update condition (YES at step S11), the process proceeds to step S12, and if the detected shape information does not satisfy the update condition (NO at step S11), the process proceeds to step S16.

Here, the update condition may be such that the degree of deformation of the counterweight 34 represented by the detected shape information from the shape of the counterweight 34 represented by the mark shape information reaches a reference degree of deformation. Here, as the degree of deformation, the difference between the proportion of the area of the counterweight 34 within the field of view 43a in the detected shape information and the proportion of the area of the counterweight 34 within the field of view 43a in the mark shape information, referred to in the description of the first determination criterion, can be used, for example. Alternatively, the degree of change in the reference point, referred to in the description of the second determination criterion, can be used as the degree of deformation, for example. As the reference degree of deformation, in the case where the first determination criterion is employed, a third threshold value less than the first threshold value can be used, for example. In this case, the processing section 52 determines that the update condition is satisfied if the difference between the proportion of the area of the counterweight 34 within the field of view 43a in the detected shape information and the proportion of the area of the counterweight 34 within the field of view 43a in the mark shape information is greater than the third threshold value, and determines that the update condition is not satisfied if the difference is less than or equal to the third threshold value, i.e. if the difference is small.

On the other hand, in the case where the above-described second determination criterion is employed, the processing section 52 determines that the update condition is not satisfied if the degree of change of the reference point in the detected shape information from the reference point in the mark shape information is less than or equal to a fourth threshold value less than the second threshold value, i.e. if the degree of change is small, and determines that the update condition is satisfied if the degree of change is greater than the fourth threshold value.

At step S12, the processing section 52 transmits the inquiry command to the display device 60 via the alarm output section 53 to ask the operator whether to perform the update. In this case, the input section 62 displays on the display device the inquiry image asking the operator whether to perform the update. The inquiry image includes, for example, a "YES" button to be selected to permit the update, a "NO" button to be selected to prohibit the update, an image of the counterweight 34 represented by the detected shape information, and an image of the counterweight 34 represented by the mark shape information. This makes it possible to provide the operator with information necessary to determine whether to perform the update.

If at step S13 the input section 62 is manipulated to permit the update by the operator (YES at step S13), the processing section 52 transmits the update command to the detection unit 40 via the communication section 51 to cause the update of the mark shape information stored in the storage section 44, the update being performed with the detected shape information as new mark shape information (step S14). Upon completion of the operation at step S14, the determination section 45 transmits a stop command for stopping the alarm to the display device 60 via the alarm output section 53, and returns the process to step S6. Consequently, the display device 60 stops the alarm. This makes it possible, when an alarm is issued due to a deformation of the counterweight 34, to prevent a situation where the alarm keeps going off so long as to reduce the working efficiency. The operation of stopping the alarm may be performed not only when the update condition is satisfied, but also when the degree of deformation is small and thus the update condition is determined to be not satisfied.

On the other hand, if at step S13 the input section 62 is manipulated to prohibit the update of the mark shape information by the operator (NO at step S13), the process returns to step S6 without updating the mark shape information.

The operation at step S14 makes it possible to ensure the robustness against a small deformation of the counterweight 34, serving as a mark, the deformation having been caused by an external force generated, for example, when the counterweight 34 comes into contact or interference with an obstacle due to a change in the specifications of the construction machine 10 or its usage in an outdoor environment. In addition, the operation at step S14, storing the detected shape information as the new mark shape information in the storage section 44, makes it possible to prevent a reduction in the working efficiency of the construction machine 10.

If, at the above-described step S10, the degree of deformation is determined to be out of the allowable range (NO at step S10), the processing section 52 allows the construction machine 10 to automatically stop (step S15). The operation at step S15 makes it possible to prevent the construction machine 10 from continuing its operation in an unstable state with the counterweight 34 deformed significantly. This thereby makes it possible to prevent occurrence of a secondary accident.

If, at step S11, it is determined that the detected shape information does not satisfy the update condition and thus there is no need to update the mark shape information (NO at step S11), the processing section 52 keeps using the mark shape information stored in the storage section 44 at the time of the above-described step S2 without updating the mark shape information with the detected shape information as new mark shape information, and allows the construction machine 10 to continue its operation without stopping (step S16). The operation at step S14 makes it possible to reduce the time and labor required to update the mark shape information and also to prevent a reduction in the working efficiency of the construction machine 10.

The following modifications can be made in the present invention.
(1) In the present embodiment, the construction machine 10 is stopped at step S15, but the present invention is not limited to this process. Alternatively, an alarm may be issued.
(2) In the present embodiment, a three-dimensional range image sensor is used as the sensor 41. However, this is merely illustrative, and any sensor capable of detecting at least a shape may be used. For example, a regular image sensor that does not detect the depth may be used as the sensor 41. However, the use of the three-dimensional sensor 41 as the sensor 41 makes it possible to acquire the distance information of an obstacle with respect to the construction machine 10 at the above-described step S6. This makes it possible to perform the interference prevention control without using an additional sensor for detecting the obstacle.
(3) The present embodiment performs the operation (step S10) of determining whether the degree of deformation is within the allowable range or not. However, the present invention is not limited to this process, and this operation may be omitted. In this case, when the mark shape information and the detected shape information do not match and the detected shape information satisfies the update condition, the mark shape information stored in the storage section 44 will be updated by the detected shape information as new mark shape information.
(4) In FIG. 1, the processing section 52 is disposed in the control device 50. However, the present invention is not limited to this configuration, and the processing section 52 may alternatively be disposed in the detection unit 40. In this case, the control device 50 will be only required to serve as a medium for exchange of information between the display device 60 and the detection unit 40. This, the processing load of the control device 50 will be reduced.
   Thus, it will be possible to use a control device 50 having a low processing capacity or a control device 50 having little spare capacity as part of the present detection apparatus, thus making it possible to extend the range of construction machines that could serve as the construction machine 10 to which the present detection apparatus can be applied. Further, in the case where the processing section 52 is disposed in the detection unit 40, the detection unit 40 can be directly connected to the display device 60 without connecting through the control device 50.
(5) In FIG. 1, the storage section 44 and the determination section 45 are disposed in the detection unit 40. However, the present invention is not limited to this configuration, and they may alternatively be disposed in the control device 50. In this case, the configuration of the detection unit 40 can be simplified. This will make it possible to increase the design flexibility of the sensor 41 applicable to the detection unit 40. In addition, the simplified configuration of the detection unit 40 will make it possible to make the detection unit 40 smaller. Further, the simplified configuration of the detection unit 40 will make it possible to eliminate the work of initializing the mark shape information at the time of replacement of the sensor 41, for example, thereby facilitating replacement of the sensor 41 when it is broken.
(6) In FIG. 5, the operator is prompted to select whether to perform the update as shown in steps S12 and S13, and the mark shape information is updated or not based on the selection result. However, the present invention is not limited to this process, and these operations may be omitted.
(7) In the present embodiment, the mark shape information represents the shape of the counterweight 34, but the present invention is not limited to such mark shape information. The mark shape information may alternatively represent the shape of another component different from the counterweight 34. For example, the mark shape information may represent the shape of a side surface of the upper slewing body 30. In this case, the sensor 41 is disposed on an upper surface of the engine room 33 or an upper surface of the operator's cab 31 such that the contour of the side surface of the upper slewing body 30 falls within the field of view 43a.
(8) In the description of the flowchart of FIG. 5, the mark shape information stored in the storage section 44 represents the shape at the time of shipping from the factory. However, when the mark shape information has been updated at least once, the storage section 44 stores, not the mark shape information at the time of shipping from the factory, but the latest mark shape information after the update.

At step S11 in the flowchart of FIG. 5, the determination of whether the update condition is satisfied is made based on the degree of deformation. However, the present invention is not limited to this process, and the processing section 52 may be made to determine that the update condition is satisfied when the operator has input a command for permitting the update.

It should be noted that the embodiment of the present invention described above is merely illustrative, and is not intended to limit the present invention in any way. Thus, the specific configurations described above may appropriately be modified. In addition, the technical effects and benefits described in the above embodiment of the present invention merely illustrate the most advantageous effects and benefits provided by the present invention. Thus, the technical effects and benefits of the present invention are not limited to those described in the above embodiment.

### (Summary of Embodiment)

The technical features of the present embodiment can be summarized as follows.
(1) The detection apparatus according to the present embodiment is a detection apparatus for use in a construction machine, comprising: a sensor for detecting shape information of a portion of the construction machine; a storage section for storing the shape information detected by the sensor as mark shape information; a determination section for determining whether the mark shape information matches detected shape information that is shape information of the portion of the construction machine newly detected by the sensor; and a processing section for, when the determination section has determined that the mark shape information and the detected shape information do not match, determining whether the detected shape information satisfies a predetermined update condition and, when having determined that the update condition is satisfied, updating the mark shape information stored in the storage section with the detected shape information as new mark shape information.
   According to the above-described configuration, when the mark shape information stored in the storage section and the detected shape information detected by the sensor have been determined to differ from each other and the detected shape information has been determined to satisfy the predetermined update condition for updating the mark shape information, the mark shape information stored in the storage section is updated by the detected shape information as new mark shape information. This makes it possible to prevent a reduction in the working efficiency of the construction machine even when the portion of the working machine serving as a mark is slightly deformed by an external force due to, for example, contact or interference in an outdoor usage environment.
(2) In the above-described configuration, it is preferable that the detection apparatus further comprise a notification section for notifying an operator, when the arithmetic section has determined that the mark shape information and the detected shape information differ from each other, that the construction machine has deformed.
   This makes it possible to allow the operator to recognize that the detected shape information has changed from the mark shape information.
(3) In the above-described configuration, it is preferable that the detection apparatus further comprises an input section to be manipulated by an operator, and that the processing section, when the determination section has determined that the mark shape information and the detected shape information do not match, determines whether a difference between the mark shape information and the detected shape information is within an allowable range and, when having determined that the difference is within the allowable range, asks the operator whether to update the mark shape information stored in the storage section with the detected shape information as the new mark shape information and, when the input section accepts an operation to select the update by the operator, updates the mark shape information stored in the storage section with the detected shape information as the new mark shape information.
   According to this configuration, when the difference between the mark shape information and the detected shape information has been determined to be within the allowable range, the operator is asked whether to update the mark shape information with the detected shape information, and when the operator has selected to perform the update, the mark shape information stored in the storage section 44 is updated by the detected shape information as new mark shape information. This makes it possible to perform the update of the mark shape information at the will of the operator.
(4) In the above-described configuration, it is preferable that the processing section, when the determination section has determined that the mark shape information and the detected shape information do not match, determines whether a difference between the mark shape information and the detected shape information exceeds an allowable range and, when having determined that the difference exceeds the allowable range, causes the notification section to issue an alarm without updating the mark shape information.
   This configuration makes it possible to allow the operator to recognize that the degree of deformation of the portion of the construction machine is great, exceeding the allowable range. In addition, since the mark shape information is not updated, it is possible to prevent, when the degree of deformation of the portion of the construction machine is excessive, a situation where the update is performed by setting the detected shape information representing the deformed shape as new mark shape information and the construction machine continues its operation. This makes it possible to prevent the construction machine from operating in an unstable state and thereby prevent occurrence of a secondary accident.
(5) In the above-described configuration, it is preferable that the sensor comprises a range image sensor.
   According to this configuration, the sensor, capable of measuring the distance to an obstacle located near the construction machine, can function as an obstacle detection sensor.
(6) In the above-described configuration, it is preferable that the detection apparatus further comprises a notification section, and that the processing section, when the determination section has determined that the mark shape information and the detected shape information differ from each other, causes the notification section to issue an alarm and, when the detected shape information has been stored in the storage section as the new mark shape information, causes the notification section to stop the alarm.
   According to this configuration, when the detected shape information has been stored in the storage section as the new shape information, the alarm is stopped. Thus, it is possible to stop the alarm issued in response to the deformation of the portion of the construction machine and thereby prevent a reduction in the working efficiency due to continuous alarming.
(7) A construction machine according to another aspect of the present invention comprises: the detection apparatus described above; a lower travelling body; and an upper slewing body slewably mounted on an upper surface of the lower travelling body, wherein the mark shape information represents a shape of a counterweight mounted on a rear end of the upper slewing body, and the sensor is mounted on an upper surface of the counterweight.

According to this configuration, the positional relationship between the sensor and the counterweight is maintained even when the construction machine changes its position. This makes it possible for the sensor to measure detected shape information that correctly reflects a change in shape of the counterweight, regardless of the position of the construction machine.

## Claims

1. A detection apparatus provided in a construction machine, comprising:
a sensor for detecting shape information of a portion of the construction machine;
a storage section for storing the shape information detected by the sensor as mark shape information;
a determination section for determining whether the mark shape information matches detected shape information that is shape information of the portion of the construction machine newly detected by the sensor; and
a processing section for, when the determination section has determined that the mark shape information and the detected shape information do not match, determining whether the detected shape information satisfies a predetermined update condition and, when having determined that the update condition is satisfied, updating the mark shape information stored in the storage section with the detected shape information as new mark shape information.

2. The detection apparatus according to claim 1, further comprising
a notification section, wherein
when the determination section has determined that the mark shape information and the detected shape information do not match, the processing section notifies an operator, using the notification section, that the construction machine has deformed.

3. The detection apparatus according to claim 1 or 2, further comprising
an input section to be manipulated by an operator, wherein
the processing section, when the determination section has determined that the mark shape information and the detected shape information do not match , determines whether a difference between the mark shape information and the detected shape information is within an allowable range and,
when having determined that the difference is within the allowable range, asks the operator whether to update the mark shape information stored in the storage section with the detected shape information as the new mark shape information and,
when the input section accepts an operation to select the update by the operator, updates the mark shape information stored in the storage section with the detected shape information as the new mark shape information.

4. The detection apparatus according to claim 2, wherein
the processing section, when the determination section has determined that the mark shape information and the detected shape information do not match, determines whether a difference between the mark shape information and the detected shape information exceeds an allowable range and,
when having determined that the difference exceeds the allowable range, causes the notification section to issue an alarm without updating the mark shape information.

5. The detection apparatus according to any one of claims 1 to 4, wherein
the sensor comprises a range image sensor.

6. The detection apparatus according to any one of claims 1 to 5, further comprising
an alarm section, wherein
the processing section, when the determination section has determined that the mark shape information and the detected shape information do not match, causes the notification section to issue an alarm and,
when the detected shape information has been stored in the storage section as the new mark shape information, causes the notification section to stop the alarm.

7. A construction machine, comprising:
the detection apparatus according to any one of claims 1 to 6;
a lower travelling body; and
an upper slewing body slewably mounted on an upper surface of the lower travelling body,
wherein
the mark shape information represents a shape of a counterweight mounted on a rear end of the upper slewing body, and
the sensor is mounted on an upper surface of the counterweight.
